# EUROPEAN PATENT APPLICATION

(11) **EP 2 662 529 A1**
(43) Date of publication of application: **13.11.2013**
(21) Application number: 12167242.2
(22) Date of filing: 09.05.2012
(51) Int. Cl.: F01D 5/28, F01D 9/04, C23C 28/00

(54) **Airfoil with PtAl bond coating and TBC, corresponding airfoil arrangement and manufacturing method**

(71) Applicant: Siemens Aktiengesellschaft, 80333 München (DE)
(72) Inventor: Butler, David, Lincoln, LN5 8JY (GB); Jenkinson, Paul, Lincoln, LN1 2FF (GB); Padley, Paul, Tattershall, Lincoln, LN4 4HB (GB); Walker, Paul Mathew, Dunholme, Lincoln, LN2 3NE (GB)

(57) **Abstract**

The present invention relates to an airfoil (101) with a coated surface section (104) which comprises a platinum aluminide and a TBC coating. A corresponding airfoil arrangement (100) and a method for manufacturing such an arrangement are also provided.

## Description

### Field of invention

The present invention relates to an airfoil, an airfoil arrangement for a gas turbine with a PtAl (Platinum Aluminide) coating and TBC (Thermal Barrier Coating) and to a method for manufacturing an airfoil arrangement for a gas turbine.

### Art Background

The stator vanes and the rotor blades in a gas turbine are exposed to the high temperature of the working fluid passing the vanes and the blades. Due to the high temperature a significant oxidation of the base alloy can occur at the leading edge of an airfoil of the stator vane or, the rotor blade. Furthermore, oxidation at the inner platform of the inner shroud and/or outer shroud of the stator vane or the rotor blade can also occur. Such degradation is currently the life limiting mechanism on this component.

### Summary of the Invention

It may be an object of the present invention to provide a more robust airfoil for a gas turbine.

The subject may be solved by an airfoil, an airfoil arrangement for a gas turbine and by a method for manufacturing an airfoil arrangement for a gas turbine.

According to a first aspect of the present invention, an airfoil, such as a stator vane or a rotor blade, for a gas turbine is presented. The airfoil comprises a coated surface section (e.g. a coated "patch") which is coated with a platinum-aluminide coating and a thermal barrier coating and which represents at least a part of the total surface of the airfoil.

According to a further aspect of the present invention a method for manufacturing an airfoil arrangement for a gas turbine is presented. The airfoil arrangement comprises an airfoil. According to the method, the airfoil is coated with a surface section comprising a PtAl coating, wherein the surface section represents at least a part of the total surface of the airfoil.

An airfoil arrangement may describe a rotor blade arrangement or a stator vane arrangement. In a stator vane arrangement, the airfoil as described above is e.g. a vane, wherein the stator vane arrangement is fixed to a casing of the gas turbine.

A rotor blade arrangement is fixed to a rotary shaft of the gas turbine and rotates with respect to the stator vane device. The airfoil of a rotor blade arrangement is a blade which is driven by the working fluid of the gas turbine.

The airfoil comprises a leading edge and a trailing edge. At the leading edge, the airfoil has a maximum curvature, for example. Generally, the fluid which flows against the airfoil contacts firstly the leading edge and the fluid is separated in a first part which flows along a suction side of the airfoil and in a second part which flows along a pressure side of the airfoil. The suction side is generally associated with higher velocity and thus lower static pressure. The pressure side has a comparatively higher static pressure than the suction side.

The trailing edge defines the edge of the airfoil where the fluid flowing along the suction surface and the fluid flowing along the pressure surface is again emerged to one flow stream.

The airfoil arrangement may comprise one airfoil or a plurality of further airfoils which are spaced apart from each other along a circumferential direction with respect to a rotary axis of the gas turbine.

The airfoil arrangement further comprises an inner shroud and an outer shroud. The airfoil is arranged between the inner shroud and the outer shroud. In particular, the leading edge and the trailing edge extend between the inner shroud and the outer shroud.

The inner shroud is located closer to the rotary axis of the gas turbine than the outer shroud. The inner shroud comprises a first inner platform and the outer shroud comprises a second inner platform, wherein respective inner surfaces of the first and second inner platforms face the inner volume of the gas turbine through which inner volume the hot working gas streams. Hence, the respective inner surfaces of the first and second inner platforms are gas-washed by the hot working gas of the gas turbine.

The hot working gas contacts first of all the leading edge section of the airfoil before flowing in a laminar manner along the suction side or the pressure side to the trailing edge section. For this reason, the leading edge section is more affected by the working fluid than the trailing edge section.

Hence, greater oxidation of the airfoil, in-particular the leading edge, may be experienced due to the high temperature of the working gas. According to the present approach, the airfoil comprises a coated surface section which is coated with a PtAl coating. The coated section is further coated with a TBC, in particular with a TBC comprising a ceramic component. The PtAl coating is located between the surface of the airfoil and the TBC. The TBC coating could be deposited by a method such as Electron Beam Physical Vapour Deposition (EBPVD) but, is not limited to this technique.

Between the (e.g. TBC) coated surface section and the inner shroud on the one side and/or between the coated surface section and the outer shroud on the other side a thinning out section (transition section) is formed onto a surface of the airfoil. In the thinning out section, the thickness of the TBC, i.e. the ceramic coating, is smoothly reduced from the edge of the coated surface section to the inner and the outer shroud, respectively. In other words, the thickness of the thermal barrier coating is thinning out (in particular till zero thickness) from the edge of the coated surface section to the inner and the outer shroud, respectively, so that i.e. the first inner platform and/or the second inner platform which is/are washed by working fluid of the turbine is/are predominantly free of a TBC. Thus, a smooth reduction in coating thickness may be present from an end of the coated surface section to the inner and the outer shroud, respectively.

The thickness of the PtAl coating of the coated section is consistent over the coated surface section of the component. A TBC coating, such as e.g. a ceramic coating, is predominantly of full thickness at the airfoil leading edge and adjacent airfoil surfaces (pressure and suction surfaces) but, may naturally taper (gradually thin) in any 'line-of-sight' coating application 'blind-spots' and progressively towards the airfoil trailing edge. At the transition section (thinning out section) the TBC coating tapers to zero thickness in fillet radii (i.e. the curvature between the coated section of the airfoil surface and the shroud (platform) surface). The reason for this is that the shroud surface should be largely free from a TBC coating. Rather than have an abrupt thickness step in the transition section, where the TBC coating goes from full thickness to zero, the TBC coating naturally tapers (feathers) out.

According to a further exemplary embodiment, the coated surface section is separated from the inner shroud and/or the outer shroud. In the transition section the thickness of the TBC coating goes from coated to un-coated. The TBC coating may thus cover the airfoil surfaces and /or the transition section between the respective airfoil and the inner shroud or the outer shroud (e.g. in the radii adjoining the airfoils/shrouds).

The TBC, which covers the PtAl coating on the airfoil surface, reduces the temperature on the airfoil and hence increases the lifetime of the airfoil. In particular, the PtAl coating comprises an aluminide matrix into which platinum is incorporated.

The PtAl coating may be used as a coating on its own and applied to the surface of the airfoil. If the PtAl coating is used in connection with the TBC the PtAl coating functions as a bond coat for the ceramic coatings (i.e. the TBC). Hence, the PtAl coating is located beneath the thermal barrier coating, i.e. between the component and the thermal barrier coating.

The PtAl coating provides the airfoil with corrosion resistance and high temperature oxidation protection. The PtAl coating may be used without a TBC on features or sections of the airfoil arrangement, which operate at a lower temperature than the airfoils.

The TBC may be required on the airfoil. The (ceramic) TBC reduces the temperature of the airfoil. The (ceramic) TBC however requires a bond coat to enable it to adhere to the component. In this case the PtAl coating is used as a bond coat as described above. The PtAl coating prevents spallation of the ceramic from the airfoil because it palliates thermal expansion differences between the metal of the airfoil and ceramics of the thermal barrier coating. Additionally there may be an internal coating of the aerofoil to provide oxidation and corrosion protection.

The coated surface section and in particular the thermal barrier coating part of the coated surface section is located between the leading edge and the trailing edge onto a surface of the airfoil (101). The coated surface section and in particular the thermal barrier coating part of the coated surface section covers the airfoil from the leading edge to the trailing edge along the suction side and/or the pressure side of the airfoil. In particular, the coating life at the leading edge of the airfoil is increased.

Furthermore, by providing the airfoil surface with the PtAl coated surface section e.g. beneath the TBC, additional efficient protection against oxidation and corrosion is achieved.

According to a further exemplary embodiment, the inner shroud comprises a first inner platform which is washed by working fluid of the turbine, wherein the first inner platform is predominantly free of the TBC.

Additionally or alternatively, the outer shroud comprises a second inner platform which is washed by working fluid of the turbine, wherein the second inner platform is predominantly free of the TBC.

In particular, according to a further exemplary embodiment of the present invention, the coated surface section and in particular the thermal barrier coating part of the coated surface section is spaced from the inner shroud and the outer shroud with a first distance. The first distance, at either extremity of the TBC, may be between (approximately) 0% and (approximately) 45%, in particular between (approximately) 5% and (approximately) 25% of a total length (100%) of the airfoil between the inner shroud and the outer shroud. A coating thinning out section may be still located between the coated surface section and the inner shroud or the outer shroud. In the thinning out section the thickness of the coating is constantly reduced along a run to the inner or outer shroud until no coating is left at the inner or outer shroud.

Particularly, in a further exemplary embodiment, the distance may be between (approximately) 0,5 cm and (approximately) 5,0 cm, in particular between (approximately) 1,5 cm and (approximately) 2,5 cm. The thinning out section may be still located between the coated surface section and the inner shroud or the outer shroud.

In a further exemplary embodiment, the thermal barrier coating has a thickness between (approximately) 0,05 mm to (approximately) 0,5 mm, in particular between (approximately) 0,15 mm to (approximately) 0,30 mm.

In a further exemplary embodiment, the airfoil arrangement further comprises a further coated surface section (e.g. a further coated "patch") which e.g. surrounds or lies beneath the TBC coated surface section. The further coated surface section may comprise e.g. an anti-oxidative or corrosion resistant coating, such as an MCrAlY coating, instead of the aforementioned PtAl coating.

The PtAl coating could be deposited by a variety of methods including but, not limited to processes such as electro-plating (for the platinum coating) followed by pack cementation or Vapour Phase Aluminide (VPA) for the aluminide type coating. The thickness of the PtAl coating of the further coated surface section may be between (approximately) 0,02 mm to (approximately) 0,1 mm, in particular between (approximately) 0,04 mm to (approximately) 0,09 mm.

The MCrAlY composition comprises indicated by the "M" in particular Nickel (Ni), Cobalt (Co) or a mixture of both. The MCrAlY coating may be coated onto the coated surface section by application methods such as electro-plating, thermal spray techniques or Electron Beam Vapour Phase Deposition (EPPVD). However, these are example application methods and other processes could be used.

Furthermore, in order to provide the proper oxidation protection, the thickness of the MCrAlY coating may be between (approximately) 0,025 mm to (approximately) 0,3 mm, in particular between (approximately) 0,05 mm to (approximately) 0,25 mm.

Furthermore, the MCrAlY coated surface section may be over-aluminised to afford additional oxidation and corrosion protection to the coating via such methods as pack cementation or VPA but, is not limited to these processes.

According to a further exemplary embodiment, the outer surface of the inner platform of the inner shroud and the outer surface of the inner platform of the outer shroud may be coated by pack cementation or VPA but, again is not limited to these processes.
Summarizing, the above described exemplary embodiment improves the thermal protection and increase the oxidation and corrosion life of the airfoil arrangement by providing a coating at the coated surface section and optionally an additional thermal barrier coating.

During or after coating of the airfoil at the coated surface section and the further coated surface section, the airfoil may be exposed to a heat treatment, so that a diffusion between the coated layers in particular of aluminium occurs. Additional, a final ageing heat treatment may be applied for the component substrate material.

Finally if required, a post coating surface finish may be applied to the coated surface section and/or the further coated surface section in order to achieve a roughness of approximately Ra=1,0 Micrometer to Ra=8 Micrometer for the coating, however this is not essential.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows schematically an airfoil arrangement according to an exemplary embodiment of the present invention;
Fig. 2 shows a perspective view of an airfoil arrangement according to an exemplary embodiment of the present invention; and
Fig. 3 shows a layer composition of an airfoil with respective coatings according to an exemplary embodiment of the present invention.

### Detailed Description

The illustrations in the drawings are schematical. It is noted that in different figures, similar or identical elements are provided with the same reference signs.

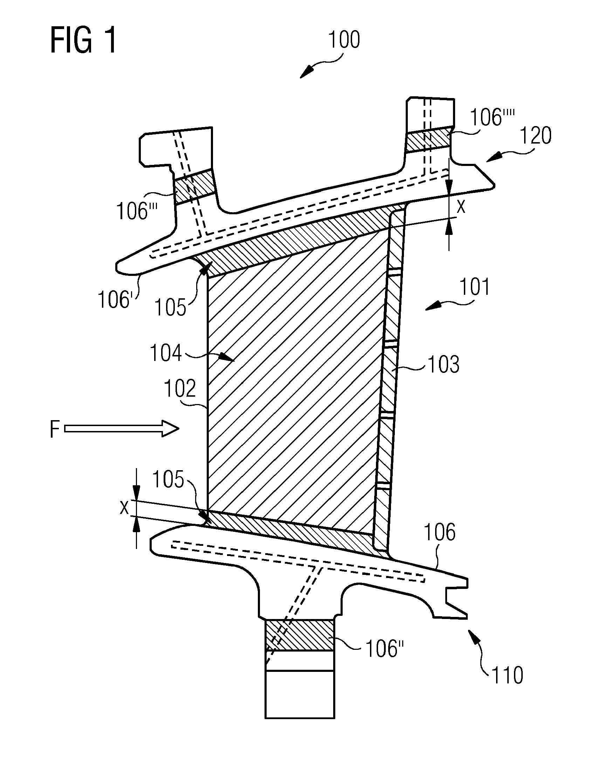

Fig. 1 shows an airfoil arrangement 100, in particular a stator vane arrangement, for a gas turbine. The airfoil arrangement 100 comprises an airfoil 101 (e.g. a vane) with a leading edge 102 and a trailing edge 103. The leading edge 102 is covered by a coated surface section 104 which comprises a PtAl coating. The trailing edge 103 may particularly be free of coatings and/or particularly free of the coating of the coated surface section 104.

Furthermore, according to Fig. 1, the airfoil 101 is arranged between an inner shroud 110 and an outer shroud 120. The leading edge 102 and the trailing edge 103 extend between the inner shroud 110 and the outer shroud 120.

Fig. 1 further shows a flow direction F of a working fluid of the gas turbine. The working fluid flows against the leading edge 102. The working fluid streams along the surfaces of the airfoil 101, i.e. the pressure side and the suction side, and leave the airfoil 101 at the trailing edge 103.

In Fig. 1, the coated surface section 104 is shown which comprises a PtAl and e.g. a TBC coating. The coated surface section 104, and in particular the TBC part of coated surface section 104, may be spaced apart from the respective inner shroud 110 or the outer shroud 120. Between the (e.g. TBC) coated surface section 104 and the respective inner shroud 110 or the outer shroud 120 a transition section, i.e. a thinning out section 105, may be formed. The (e.g. TBC) coated surface section 104 is spaced from the inner shroud 110 and/or the outer shroud 120 with a distance x. The distance x is measured e.g. by a length along a normal of a plane in which the inner surface of the inner shroud 110 or the inner surface of the outer shroud 120, respectively, is located.

Furthermore, guiding rails located at the inner shroud 110 and/or at the outer shroud 120. The guiding rails are needed for a fixation of the airfoil arrangement 100 to a respective housing of the turbine or for guiding cooling fluid. At selective sections of the inner shroud 110 and the outer shroud 120 further coated surface sections 106, 106', 106", 106"', 106"" are coated for example with a further anti-oxidation and anti-corrosive coating, such as an MCrAlY or PtAl coating or an aluminide type (e.g. pack cementation or VPA) coating.

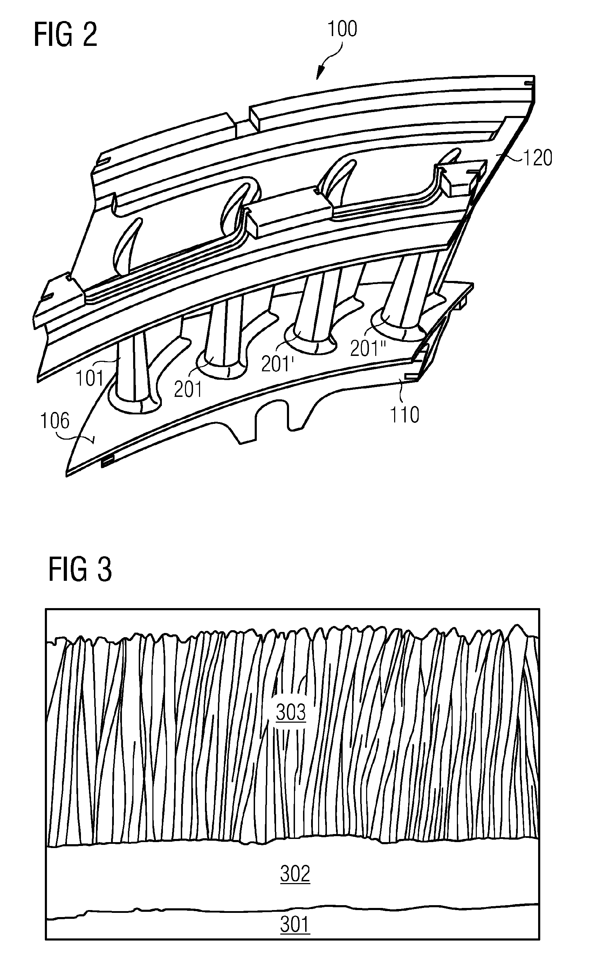

Fig. 2 shows an exemplary embodiment of an airfoil arrangement 100 which comprises the airfoil 101 and further airfoils 201, 201', 201". The airfoils 101, 201, 201', 201" are arranged between the inner shroud 110 and the outer shroud 120. Furthermore, in Fig. 2 an inner surface 106 of the inner shroud 110 is shown. The inner surface 106 of the inner shroud faces the inner volume of the gas turbine through which the hot working fluid flows. Hence, the inner surface 106 is washed by the hot working fluid.

Specifically, the inner surface 106 of the inner shrouds 110 and/or the inner surface of the outer shrouds 120 may be coated with an oxidation and corrosion preventative coating in order to reduce oxidation and corrosion.

Seal slots, such as scallop seal slots, and machined surfaces of the airfoil arrangement 100 may be kept free from any coating in order to maintain the original dimensions.

Fig. 3 shows a layer composition of the coated section 104 of the airfoil 101 with respective coatings according to an exemplary embodiment of the present invention.

In Fig.3, the e.g. PtAl coating is used in connection with e.g. EBPVD type TBC 303. The PtAl coating functions as a bond coat 302 for the ceramic coating (i.e. the thermal barrier coating 303). Hence, the PtAl coating 302 is located beneath the thermal barrier coating 303, i.e. between the airfoil surface 301 and the thermal barrier coating 303. As a bond layer, an e.g. MCrAlY-coating may also be used.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Airfoil (101) for a gas turbine, the airfoil (101) comprising
a coated surface section (104) which is coated with a platinum-aluminide coating and thermal barrier coating and which represents at least a part of the total surface of the airfoil (101).

2. Airfoil (101) according to claim 1, further comprising
a leading edge (102) and a trailing edge (103),
wherein the thermal barrier coating of the coated surface section (104) is located between the leading edge (102) and the trailing edge (103) onto a surface of the airfoil (101).

3. Airfoil (101) according to claim 1 or 2,
wherein the platinum-aluminium coating has a thickness between 0,02 mm to 0,10 mm, in particular between 0,04 mm to 0,09 mm.

4. Airfoil (101) according to one of the claims 1 to 3,
wherein the airfoil (101) is a stator vane or a rotor blade.

5. Airfoil arrangement (100) comprising
an airfoil (101) according to one of the claims 1 to 4, an inner shroud (110) and
an outer shroud (120),
wherein the airfoil (101) is arranged between the inner shroud (110) and the outer shroud (120).

6. Airfoil arrangement (100) according to claim 5,
wherein the inner shroud (110) comprises an inner platform which is washed during operation of the gas turbine by working fluid of the turbine,
wherein the inner platform is free of a thermal barrier coating.

7. Airfoil arrangement (100) according to claim 5 or 6,
wherein the outer shroud (120) comprises a further inner platform which is washed during operation of the gas turbine by working fluid of the turbine,
wherein the further inner platform is free of a thermal barrier coating.

8. Airfoil arrangement (100) according to one of the claims 5 to 7,
wherein the thermal barrier coating portion of the coated surface section (104) is spaced from the inner shroud (110) and/or the outer shroud (120) with a distance (x).

9. Airfoil arrangement (100) according to claim 8,
wherein the distance (x) is between 0% and 45%, in particular between 5% and 25%, of a total length of the airfoil (101) between the inner shroud (110) and the outer shroud (120).

10. Airfoil arrangement (100) according to one of the claims 5 to 9,
wherein the PtAl portion of the coated section (104) is further coated with a thermal barrier coating, in particular with a thermal barrier coating comprising a ceramic component, and
wherein the platinum-aluminium coating is located between the surface of the airfoil (101) and the thermal barrier coating.

11. Airfoil arrangement (100) according to claim 10,
wherein the thermal barrier coating has a thickness between 0,10 mm to 0,5 mm, in particular between 0,15 mm to 0,3 mm.

12. Airfoil arrangement (100) according to claim 10 or 11,
wherein the airfoil (101) further comprises a thinning out section (105) which is formed onto the surface of the airfoil (101),
wherein the thinning out section (105) is located between the coated surface section (104) and the inner shroud (110) and/or between the coated surface section (104) and the outer shroud (120),
wherein in the thinning out section (105) the thickness of the thermal barrier coating is smoothly reduced from the edge of the coated surface section (104) to the inner shroud (110) or the outer shroud (120), respectively.

13. Method for manufacturing an airfoil arrangement (100) for a gas turbine, wherein the airfoil arrangement (100) comprises an airfoil (101),
the method comprising
coating a surface section (104) of the airfoil (101) with a platinum-aluminide coating and a thermal barrier coating, wherein the surface section (104) represents at least a part of the total surface of the airfoil (101).

14. Method according to claim 13,
wherein the platinum of the platinum-aluminide coating is coated by an electo-plating process, the aluminide of the platinum-aluminide coating is coated by a VPA process and the thermal barrier coating is coated by an EBPVD process.
